# EUROPEAN PATENT APPLICATION

(11) **EP 3 249 575 A1**
(43) Date of publication of application: **29.11.2017**
(21) Application number: 16884248.2
(22) Date of filing: 28.09.2016
(51) Int. Cl.: G06K 9/00

(54) **PRESSURE DETECTION METHOD AND APPARATUS**

(30) Priority: 17.02.2016 CN 201610089672
(71) Applicant: Beijing Xiaomi Mobile Software Co., Ltd., Beijing 100085 (CN)
(72) Inventor: YANG, Kun, Beijing 100085 (CN); JIANG, Zhongsheng, Beijing 100085 (CN); JI, Chuanshun, Beijing 100085 (CN)
(74) Representative: Reeve, Nicholas Edward
(86) International application number: PCT/CN2016/100645
(87) International publication number: WO 2017/140108

(57) **Abstract**

The present disclosure relates to a pressure detection method and apparatus, which belongs to a terminal technology field. The method includes: sampling n frames of fingerprint image in sequence by a fingerprint recognition sensor, where n≥2 and n is an integer; obtaining an area of fingerprint in each frame of fingerprint image; determining a change trend of a pressure applied to the fingerprint recognition sensor according to a change trend of the areas in the n frames of fingerprint image. The present disclsoure solves the problem in the related art that the pressure detection function can only be realized by disposing a special pressure sensing module in a terminal device, resulting in big size, less lightness and convenience and high cost of the terminal device; the pressure sensing module is omitted, thus facilitating simplifying the structure design of the terminal device and reducing cost.

## Description

### CROSS-REFERENCE TO RELATED APPLICATIONS

This application is based upon and claims priority to Chinese Patent Application Serial No. 201610089672.3, filed on February 17, 2016, the entire contents of which are incorporated herein by reference.

### TECHNICAL FIELD

The present disclosure relates to a terminal technology field, and more particularly to a pressure detection method and apparatus.

### BACKGROUND

Terminal devices, such as mobile phones and tablet PCs, are electronic devices commonly used in daily life.

In the related art, in order to realize the pressure detection function in the terminal device, a special pressure sensing module is provided in the terminal device, for realizing detecting a touch pressure applied to the pressure sensing module. In general, the pressure sensing module has two different types of resistance type and capacitance type.

However, in the related art, the pressure detection function can only be realized by disposing a special pressure sensing module in the terminal device, which causes the terminal device to have problems of big size, less lightness and convenience, and high cost.

### SUMMARY

In order to overcome problems existing in the related art, embodiments of the present disclosure provide a pressure detection method and apparatus. The technical solutions are as follows.

According to a first aspect of embodiments of the present disclosure, a pressure detection method is provided. The method includes:
sampling n frames of fingerprint image in sequence by a fingerprint recognition sensor, where n≥2 and n is an integer;
obtaining an area of fingerprint in each frame of fingerprint image;
determining a change trend of a pressure applied to the fingerprint recognition sensor according to a change trend of the areas in the n frames of fingerprint image.

Alternatively, determining a change trend of a pressure applied to the fingerprint recognition sensor according to a change trend of the areas in the n frames of fingerprint image includes:
if the change trend of the areas in the n frames of fingerprint image is increasing gradually, determining that the change trend of the pressure applied to the fingerprint recognition sensor is increasing gradually;
if the change trend of the areas in the n frames of fingerprint image is decreasing gradually, determining that the change trend of the pressure applied to the fingerprint recognition sensor is decreasing gradually.

Alternatively, the method further includes:
executing a control operation corresponding to the change trend of the pressure.

Alternatively, the method further includes:
obtaining a pressure level corresponding to an obtained largest area of fingerprint according to a predetermiend correspondence,
in which, the predetermiend correspondence includes a correspondence of at least one group of area and pressure level.

Alternatively, the method further includes: executing a control operation corresponding to the pressure level.

According to a second aspect of embodiments of the present disclosure, a pressure detection apparatus is provided. The apparatus includes:
an image sampling module, configured to sample n frames of fingerprint image in sequence by a fingerprint recognition sensor, where n≥2 and n is an integer;
an area obtaining module, configured to obtain an area of fingerprint in each frame of fingerprint image;
a pressure determining module, configured to determine a change trend of a pressure applied to the fingerprint recognition sensor according to a change trend of the areas in the n frames of fingerprint image.

Alternatively, the pressure determining module is configure to:
determine that the change trend of the pressure applied to the fingerprint recognition sensor is increasing gradually, if the change trend of the areas in the n frames of fingerprint image is increasing gradually;
determine that the change trend of the pressure applied to the fingerprint recognition sensor is decreasing gradually, if the change trend of the areas in the n frames of fingerprint image is decreasing gradually.

Alternatively, the apparatus further includes:
a first executing module, configured to exeucte a control operation corresponding to the change trend of the pressure.

Alternatively, the apparatus further includes:
a level obtaining module, configured to obtain a pressure level corresponding to an obtained largest area of fingerprint according to a predetermiend correspondence,
in which, the predetermiend correspondence includes a correspondence of at least one group of area and pressure level.

Alternatively, the apparatus further includes:
a second executing module, configured to execute a control operation corresponding to the pressure level.

According to a third aspect of embodiments of the present disclosure, a pressure detection apparatus is provided. The apparatus includes:
a processor;
a memory configured to store instructions executable by the processor,
in which the processor is configured to:
   sample n frames of fingerprint image in sequence by a fingerprint recognition sensor, where n≥2 and n is an integer;
   obtain an area of fingerprint in each frame of fingerprint image;
   determine a change trend of a pressure applied to the fingerprint recognition sensor according to a change trend of the areas in the n frames of fingerprint image.

Technical solutions provided by embodiments of the present disclosure may include the following advantageous effects.

By obtaining an area of the fingerprint in the fingerprint image, and determining the change trend of the pressure applied to the fingerprint recognition sensor according to the change trend of the areas of the fingerprints in multiple frames of fingerprint image, the problem in the related art that the pressure detection function can only be realized by disposing a special pressure sensing module in a terminal device, resulting in big size, less lightness and convenience, and high cost of the terminal device is solved, and the pressure sensing module is omitted, thus facilitating simplifying the structure design of the terminal device and reducing cost.

It is to be understood that both the foregoing general description and the following detailed description are exemplary only and explanatory and are not restrictive of the present disclosure.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.
Fig. 1 schematically shows a schematic diagram of a fingerprint image.
Fig. 2 is a flow chart of a pressure detection method according to an exemplary embodiment.
Fig. 3 is a flow chart of a pressure detection method according to another exemplary embodiment.
Fig. 4 is a block diagram of a pressure detection apparatus according to an exemplary embodiment.
Fig. 5 is a block diagram of a pressure detection apparatus according to another exemplary embodiment.
Fig. 6 is a block diagram of a device according to an exemplary embodiment.

### DETAILED DESCRIPTION

Exemplary embodiments will be described in detail herein, and examples thereof are illustrated in accompanying drawings. Throughout figures referred by the following description, the same reference number in different figures indicates the same or similar elements unless otherwise stated. Implementations described in the following exemplary embodiments do not represent all the implementations consistent with the present disclosure. Instead, they are only examples of the device and method consistent with some aspects of the present disclosure detailed in the appended claims.

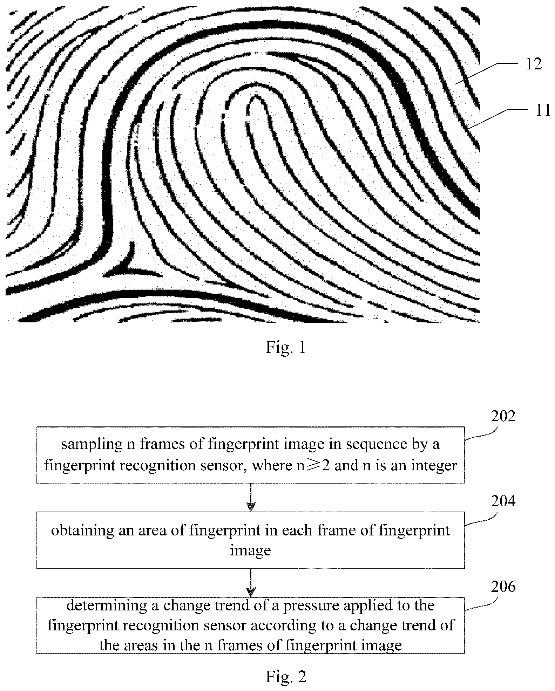

A terminal device, such as a mobile phone and a tablet PC, is generally provided with a fingerprint recognition sensor, for realizing a fingerprint recognition function. The fingerprint recognition sensor includes but is not limited to an optical fingerprint recognition sensor, a capacitive fingerprint recognition sensor, and an ultrasonic fingerprint recognition sensor. Different types of fingerprint recognition sensor have a basically same principle, i.e., obtaining the fingerprint image by scanning uneven lines of the skin. As shown in Fig. 1, which schematically shows a schematic diagram of a fingerprint image, the fingerprint image records ridges 11 (black lines) and valleys 12 (white regions between black lines) of the fingerprint. When a fingerprint matching is performed, detail feature points of the fingerprint are identified from the fingerprint image, and a fingerprint matching result is obtained by comparing different detail feature points of the fingerprint. The detail feature points of the fingerprint include endpoints, bifurcation points, joint points and breakpoints of the ridges.

The "fingerprint" mentioned herein generally refers to but not is limited to lines of the user's finger, and can also refers to lines of the user's other body parts, such as the palm.

With the technical solution provided by the present disclosure, by sampling the fingerprint image based on the fingerprint recognition sensor, detecting the touch pressure is realized. In the following, the technical solution provided by the present disclosure is illustrated and explained through several embodiments.

Fig. 2 is a flow chart of a pressure detection method according to an exemplary embodiment. The pressure detection method may be applied in a terminal device provided with a fingerprint recognition sensor. For example, the terminal device may be a mobile phone, a tablet PC, a wearable device, etc. The pressure detection method may include the following steps.

In step 202, n frames of fingerprint image are sampled in sequence by the fingerprint recognition sensor, where n≥2 and n is an integer.

In step 204, an area of the fingerprint in each frame of fingerprint image is obtained.

In step 206, a change trend of a pressure applied to the fingerprint recognition sensor is determined according to a change trend of the areas in the n frames of fingerprint image.

In conclusion, with the pressure detection method provided by this embodiment, by obtaining the area of the fingerprint in the fingerprint image, and determining the change trend of the pressure applied to the fingerprint recognition sensor according to the change trend of the areas of the fingerprints in multiple frames of fingerprint image, the problem in the related art that the pressure detection function can only be realized by disposing a special pressure sensing module in a terminal device, resulting in big size, less lightness and convenience and high cost of the terminal device is solved, and the pressure sensing module is omitted, thus facilitating simplifying the structure design of the terminal device and reducing cost.

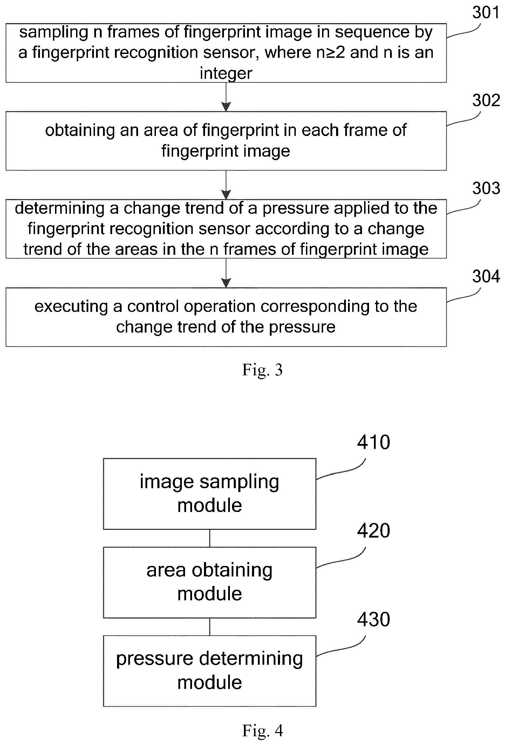

Fig. 3 is a flow chart of a pressure detection method according to another exemplary embodiment. The pressure detection method can be applied in a terminal device provided with a fingerprint recognition sensor. For example, the terminal device may be a mobile phone, a tablet PC, a wearable device, etc. The pressure detection method may include the following steps.

In step 301, n frames of fingerprint image are sampled in sequence by the fingerprint recognition sensor, where n≥2 and n is an integer.

The terminal device samples n frames of fingerprint image in sequence by the fingerprint recognition sensor. The fingerprint image records the fingerprint, and the area of the fingerprint recorded in the fingerprint image is substantially same as the contact area between the skin surface and the fingerprint recognition sensor.

In step 302, an area of the fingerprint in each frame of fingerprint image is obtained.

The terminal device obtains the area of the fingerprint in each frame of fingerprint image. Since the skin surface of the body part such as the finger is non-planar and deformable, and the surface of the fingerprint recognition sensor is a fixed surface, the contact area between the skin surface and the fingerprint recognition sensor will incrase with the increasing of the touch pressure when the skin surface is in contact with the fingerprint recognition sensor. In this embodiment, by analyzing the change trend of the areas of the fingerprints in multiple frames of fingerprint image, the change trend of the touch pressure is detected.

In step 303, the change trend of the pressure applied to the fingerprint recognition sensor is determiend according to the change trend of the areas in the n frames of fingerprint image.

The terminal device determines the change trend of the pressure applied to the fingerprint recognition sensor according to the change trend of the areas of the fingerprints in the n frames of fingerprint image. If the change trend of the areas of the fingerprints in the n frames of fingerprint image is increasing gradually, the terminal device determines that the change trend of the pressure applied to the fingerprint recognition sensor is increasing gradually. In contrast, if the change trend of the areas of the fingerprints in the n frames of fingerprint image is decreasing gradually, the terminal device determines that the change trend of the pressure applied to the fingerprint recognition sensor is decreasing gradually.

In addition, the change trend of the pressure can be represented by a logic level signal. For example, the logic level signal 1 represents that the change trend of the pressure is increasing gradually, and the logic level signal 0 represents that the change trend of the pressure is decreasing gradually.

In step 304, a control operation corresponding to the change trend of the pressure is executed.

The terminal device executes the control operation corresponding to the change trend of the pressure. For example, the terminal device adjusts volume or screen brightness according to the change trend of the pressure. For example, when the pressure increases gradually, the volume is controlled to increase gradually. In contrast, when the pressure decreases gradually, the volume is controlled to decrease gradually.

The correspondence between the change trend of the pressure and the control operation may be pre-set and stored in the terminal device, or may be customized by the user, which is not limited in embodiments of the present disclosure.

Alternatively, the terminal device may obtain a pressure level corresponding to an obtained largest area of fingerprint according to the predetermined correspondence after obtaining the area of the fingerprint. The predetermined correspondence includes a correspondence of at least one group of area and pressure level. With the above method, the touch pressure may be quantized in levels, and the value of the pressure may be estimated. In practice, the above predetermined correspondence may be preset according to large experimental data and stored in the terminal device, or may be customized by the user.

Alternatively, the terminal device may execute a control operation corresponding to the pressure level after obtaining the pressure level. The terminal device stores the correspondence of at least one group of pressure level and control operation. For example, the pressure level 1 corresponds to controlling the terminal device to shut down, the pressure level 2 corresponds to controlling the terminal device to start, and the pressure level 3 corresponds to controlling the terminal device to restart. The above correspondence may be preset and stored in the terminal device, or may be customized by the user, which is not limited herein.

In conclusion, with the pressure detection method provided by this embodiment, by obtaining the area of the fingerprint in the fingerprint image, and determining the change trend of the pressure applied to the fingerprint recognition sensor according to the change trend of the areas of the fingerprints in multiple frames of fingerprint image, the problem in the related art that the pressure detection function can only be realized by disposing a special pressure sensing module in a terminal device, resulting in big size, less lightness and convenience and high cost of the terminal device is solved, and the pressure sensing module is omitted, thus facilitating simplifying the structure design of the terminal device and reducing cost.

In addition, with the pressure detection method provided by this embodiment, the pressure level correpsonding to an obtained largest area of fingerprint is obtained according to the predetermined correspondence, thus realizing quantizing the touch pressure in levels and estimating the value of the pressure.

In the following, apparatus embodiments of the present disclosure are provided, which can be configured to execute method embodiments of the present disclosure. With respect to undisclosed details in the apparatus embodiments, reference may be made to method embodiments of the present disclosure.

Fig. 4 is a block diagram of a pressure detection apparatus according to an exemplary embodiment. The pressure detection apparatus may be realized as a part of the terminal device or the whole terminal device by a hardware, a software, or a combination thereof. The pressure detection apparatus may include an image sampling module 410, an area obtaining module 420 and a pressure determining module 430.

The image sampling module 410 is configured to sample n frames of fingerprint image in sequence by a fingerprint recognition sensor, where n≥2 and n is an integer.

The area obtaining module 420 is configured to obtain an area of fingerprint in each frame of fingerprint image.

The pressure determining module 430 is configured to determine a change trend of a pressure applied to the fingerprint recognition sensor according to a change trend of the areas in the n frames of fingerprint image.

In conclusion, with the pressure detection apparatus provided by this embodiment, by obtaining the area of the fingerprint in the fingerprint image, and determining the change trend of the pressure applied to the fingerprint recognition sensor according to the change trend of the areas of the fingerprints in multiple frames of fingerprint image, the problem in the related art that the pressure detection function can only be realized by disposing a special pressure sensing module in a terminal device, resulting in big size, less lightness and convenience and high cost of the terminal device is solved, and the pressure sensing module is omitted, thus facilitating simplifying the structure design of the terminal device and reducing cost.

In an alternative embodiment based on the embodiment shown in Fig. 4, the pressure determining module 430 is configured to: determine that the change trend of the pressures applied to the fingerprint recognition sensor is increasing gradually, if the change trend of the areas in the n frames of fingerprint image is increasing gradually; determine that the change trend of the pressure applied to the fingerprint recognition sensor is decreasing gradually, if the change trend of the areas in the n frames of fingerprint image is decreasing gradually.

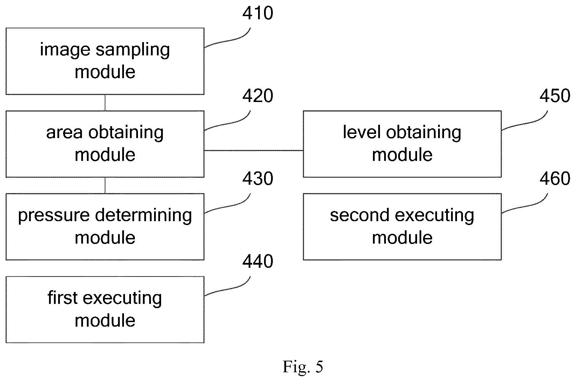

In another alternative embodiment based on the embodiment shown in Fig. 4, as shown in Fig. 5, the apparatus further includes a first executing module 440.

The first executing module 440 is configured to exeucte a control operation corresponding to the change trend of the pressure.

In another alternative embodiment based on the embodiment shown in Fig. 4, as shown in Fig. 5, the apparatus further includes a level obtaining module 450.

The level obtaining module 450 is configured to obtain a pressure level corresponding to an obtained largest area of fingerprint according to a predetermiend correspondence, in which the predetermiend correspondence includes a correspondence of at least one group of area and pressure level.

Alternatively, as shown in Fig. 5, the apparatus further includes a second executing module 460.

The second executing module 460 is configured to execute a control operation corresponding to the pressure level.

It should be noted that, the apparatus provided by above embodiments are illustrated by dividing into respective functional modules for realizing the function thereof. In practice, the above functions may be assigned to different functional modules according to actual demands, that is, the content structure of the apparatus is divided into different functional modules, for completing all or part of the above described functions.

With respect to the apparatus in the above embodiments, the specific manners for performing operations for individual modules therein have been described in detail in embodiments regarding the methods, which will not be elaborated herein.

Exemplary embodiments of the present disclosure further provide a pressure detection apparatus, which can realize the pressure detection method provided by the present disclosure. The apparatus includes a processor and a memory for storing instructions executable by the processor, in which the processor is configured to:
sample n frames of fingerprint image in sequence by a fingerprint recognition sensor, where n≥2 and n is an integer;
obtain an area of fingerprint in each frame of fingerprint image;
determine a change trend of a pressure applied to the fingerprint recognition sensor according to a change trend of the areas in the n frames of fingerprint image.

Alternatively, the processor is configured to:
determine that the change trend of the pressure applied to the fingerprint recognition sensor is increasing gradually, if the change trend of the areas in the n frames of fingerprint image is increasing gradually;
determine that the change trend of the pressure applied to the fingerprint recognition sensor is decreasing gradually, if the change trend of the areas in the n frames of fingerprint image is decreasing gradually.

Alternatively, the processor is further configured to exeucte a control operation corresponding to the change trend of the pressure.

Alternatively, the processor is further configured to obtain a pressure level corresponding to an obtained largest area of fingerprint according to a predetermiend correspondence, in which the predetermiend correspondence includes a correspondence of at least one group of area and pressure level.

Alternatively, the processor is further configured to execute a control operation corresponding to the pressure level.

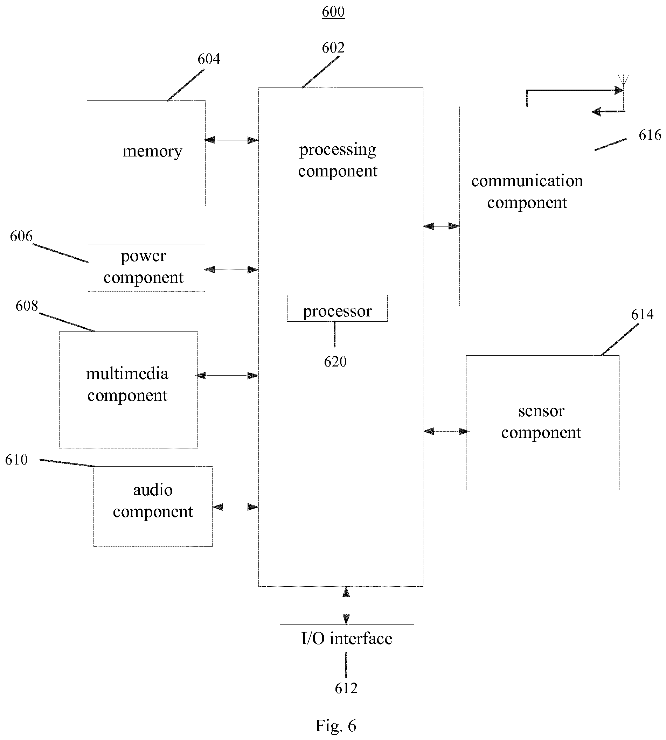

Fig. 6 is a block diagram showing a device 600 according to an exemplary embodiment. For example, the device 600 may be a mobile telephone, a computer, a digital broadcasting terminal, a message transceiver, a game console, a tablet device, a medical facility, a fitness equipment, a personal digital assistant, etc.

Referring to Fig. 6, the device 600 may include one or more of the following components: a processing component 602, a memory 604, a power component 606, a multimedia component 608, an audio component 610, an input/output (I/O) interface 612, a sensor component 614, and a communication component 616.

The processing component 602 typically controls overall operations of the device 600, such as the operations associated with display, telephone calls, data communications, camera operations, and recording operations. The processing component 602 may include one or more processors 620 to execute instructions to perform all or part of the steps in the above described methods. Moreover, the processing component 602 may include one or more modules which facilitate the interaction between the processing component 602 and other components. For instance, the processing component 602 may include a multimedia module to facilitate the interaction between the multimedia component 608 and the processing component 602.

The memory 604 is configured to store various types of data to support the operation of the device 600. Examples of such data include instructions for any applications or methods operated on the device 600, contact data, phonebook data, messages, pictures, video, etc. The memory 604 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 606 provides power to various components of the device 600. The power component 606 may include a power management system, one or more power sources, and any other components associated with the generation, management, and distribution of power in the device 600.

The multimedia component 608 includes a screen providing an output interface between the device 600 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 608 includes a front camera and/or a rear camera. The front camera and/or the rear camera may receive an external multimedia datum while the device 600 is in an operation mode, such as a photographing mode or a video mode. Each of the front camera and the rear camera may be a fixed optical lens system or have focus and optical zoom capability.

The audio component 610 is configured to output and/or input audio signals. For example, the audio component 610 includes a microphone ("MIC") configured to receive an external audio signal when the device 600 is in an operation mode, such as a call mode, a recording mode, and a voice recognition mode. The received audio signal may be further stored in the memory 604 or transmitted via the communication component 616. In some embodiments, the audio component 610 further includes a speaker to output audio signals.

The I/O interface 612 provides an interface between the processing component 602 and peripheral interface modules, such as a keyboard, a click wheel, buttons, and the like. The buttons may include, but are not limited to, a home button, a volume button, a starting button, and a locking button.

The sensor component 614 includes one or more sensors to provide status assessments of various aspects of the device 600. The sensor component 614 includes at least a fingerprint recognition sensor, such as an optical fingerprint recognition sensor, a capacitive fingerprint recognition sensor, an ultrasonic fingerprint recognition sensor, and the like. Alternatively, the sensor component 614 may detect an open/closed status of the device 600, relative positioning of components, e.g., the display and the keypad, of the device 600, a change in position of the device 600 or a component of the device 600, a presence or absence of user contact with the device 600, an orientation or an acceleration/deceleration of the device 600, and a change in temperature of the device 600. The sensor component 614 may include a proximity sensor configured to detect the presence of nearby objects without any physical contact. The sensor component 614 may also include a light sensor, such as a CMOS or CCD image sensor, for use in imaging applications. In some embodiments, the sensor component 614 may also include an accelerometer sensor, a gyroscope sensor, a magnetic sensor, a pressure sensor, or a temperature sensor.

The communication component 616 is configured to facilitate communication, wired or wirelessly, between the device 600 and other devices. The device 600 can access a wireless network based on a communication standard, such as Wi-Fi, 2G, or 3G, or a combination thereof. In one exemplary embodiment, the communication component 616 receives a broadcast signal or broadcast associated information from an external broadcast management system via a broadcast channel. In one exemplary embodiment, the communication component 616 further includes a near field communication (NFC) module to facilitate short-range communications. For example, the NFC module may be implemented based on a radio frequency identifier (RFID) technology, an infrared data association (IrDA) technology, an ultra-wideband (UWB) technology, a Bluetooth (BT) technology, and other technologies.

In exemplary embodiments, the device 600 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer readable storage medium including instructions, such as included in the memory 604, executable by the processor 620 in the device 600, for performing the above-described methods. For example, the non-transitory computer-readable storage medium may be a ROM, a RAM, a CD-ROM, a magnetic tape, a floppy disc, an optical data storage device, and the like.

A non-transitory computer readable storage medium, having instruction stored therein that, when executed by the processor of the device 600, cause the device 600 to execute the above methods.

It should be understood that, the "multiple" mentioned herein refers to two or more. "and/or" describes the association relationship of associated objects, including three relationships. For example, for A and/or B, it represents three situations: existing A alone, existing A and B, and existing B alone. The character "/" generally represents the relationship "or" of the associated objects.

Other embodiments of the present disclosure will be apparent to those skilled in the art from consideration of the specification and practice of the disclosure disclosed here. This application is intended to cover any variations, uses, or adaptations of the disclosure following the general principles thereof and including such departures from the present disclosure as come within known or customary practice in the art. It is intended that the specification and examples be considered as exemplary only, with a true scope and spirit of the disclosure being indicated by the following claims.

It will be appreciated that the present disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A pressure detection method, comprising:
sampling n frames of fingerprint image in sequence by a fingerprint recognition sensor, where n≥2 and n is an integer;
obtaining an area of fingerprint in each frame of fingerprint image;
determining a change trend of a pressure applied to the fingerprint recognition sensor according to a change trend of the areas in the n frames of fingerprint image.

2. The method according to claim 1, wherein determining a change trend of a pressure applied to the fingerprint recognition sensor according to a change trend of the areas in the n frames of fingerprint image comprises:
if the change trend of the areas in the n frames of fingerprint image is increasing gradually, determining that the change trend of the pressure applied to the fingerprint recognition sensor is increasing gradually;
if the change trend of the areas in the n frames of fingerprint image is decreasing gradually, determining that the change trend of the pressure applied to the fingerprint recognition sensor is decreasing gradually.

3. The method according to claim 1 or 2, further comprising:
executing a control operation corresponding to the change trend of the pressure.

4. The method according to claim 1 or 2, further comprising:
obtaining a pressure level corresponding to an obtained largest area of fingerprint according to a predetermiend correspondence,
wherein the predetermiend correspondence comprises a correspondence of at least one group of area and pressure level.

5. The method according to claim 4, further comprising:
executing a control operation corresponding to the pressure level.

6. A pressure detection apparatus, comprising:
an image sampling module, configured to sample n frames of fingerprint image in sequence by a fingerprint recognition sensor, where n≥2 and n is an integer;
an area obtaining module, configured to obtain an area of fingerprint in each frame of fingerprint image;
a pressure determining module, configured to determine a change trend of a pressure applied to the fingerprint recognition sensor according to a change trend of the areas in the n frames of fingerprint image.

7. The apparatus according to claim 6, wherein the pressure determining module is configure to:
determine that the change trend of the pressure applied to the fingerprint recognition sensor is increasing gradually, if the change trend of the areas in the n frames of fingerprint image is increasing gradually;
determine that the change trend of the pressure applied to the fingerprint recognition sensor is decreasing gradually, if the change trend of the areas in the n frames of fingerprint image is decreasing gradually.

8. The apparatus according to claim 6 or 7, further comprising:
a first executing module, configured to exeucte a control operation corresponding to the change trend of the pressure.

9. The apparatus according to claim 6 or 7, further comprising:
a level obtaining module, configured to obtain a pressure level corresponding to an obtained largest area of fingerprint according to a predetermiend correspondence,
wherein the predetermiend correspondence comprises a correspondence of at least one group of area and pressure level.

10. The apparatus according to claim 9, further comprising:
a second executing module, configured to execute a control operation corresponding to the pressure level.

11. A pressure detection apparatus, comprising:
a processor;
a memory configured to store instructions executable by the processor,
wherein the processor is configured to:
sample n frames of fingerprint image in sequence by a fingerprint recognition sensor, where n≥2 and n is an integer;
obtain an area of fingerprint in each frame of fingerprint image;
determine a change trend of a pressure applied to the fingerprint recognition sensor according to a change trend of the areas in the n frames of fingerprint image.
